(19) Europäisches Patentamt

European Patent Office

Office européen des brevets

(11) Veröffentlichungsnummer : **0 007 098**
**B1**

(12) **EUROPÄISCHE PATENTSCHRIFT**

(45) Veröffentlichungstag der Patentschrift :
09.09.81

(21) Anmeldenummer : 79102401.1

(22) Anmeldetag : 12.07.79

(51) Int. Cl.³ : **C 01 B 33/28**

(54) Verfahren zur Herstellung von kristallinen Aluminosilikatzeolithen.

(30) Priorität : 17.07.78 DE 2831334

(43) Veröffentlichungstag der Anmeldung :
23.01.80 (Patentblatt 80/02)

(45) Bekanntmachung des Hinweises auf die Patenterteilung : 09.09.81 Patentblatt 81/36

(84) Benannte Vertragsstaaten :
**BE DE FR GB NL**

(56) Entgegenhaltungen :
DE - AI - 2 442 240
DE - AI - 2 817 576
US - A - 3 702 886
US - A - 3 941 871

(73) Patentinhaber : BASF Aktiengesellschaft
Carl-Bosch-Strasse 38
D-6700 Ludwigshafen (DE)

(72) Erfinder : Marosi, Laszlo, Dr. Chem.
Londoner Ring 11
D-6700 Ludwigshafen (DE)
Erfinder : Stabenow, Joachim, Dr. Phys.
Am Feldrain 22
D-6940 Weinheim (DE)
Erfinder : Schwarzmann, Matthias, Dr. Chem.
Carl-Bosch-Strasse 54
D-6703 Limburgerhof (DE)

Imprimerie Jouve, 17, rue du Louvre, 75001 Paris, France

## Verfahren zur Herstellung von kristallinen Aluminosilikatzeolithen

Die Erfindung betrifft ein Verfahren zur Herstellung von kristallinen Aluminosilikatzeolithen vom ZSM-5 Typ.

Die gebräuchlichsten Zeolithe des A-, X- und Y-Typs haben eine große technische Bedeutung erlangt. Sie werden als Ionenaustauscher, Molekularsiebe und Katalysatoren technisch eingesetzt. Technische Verfahren wie das katalytische und hydrierende Kracken von Kohlenwasserstoffen werden mit Zeolithkatalysatoren durchgeführt. Neuerdings gewinnen Zeolithe von Typ ZSM-5 oder ZSM-8 zunehmend Interesse, mit denen neuartige Reaktionen, wie z.B. die Umwandlung von Methanol in flüssige Kohlenwasserstoffe katalysiert werden können.

Diese Zeolithe zeichnen sich durch eine besonders hohe katalytische Selektivität aus.

Der Zeolith ZSM-5 wird in der US-PS 3 702 886 beschrieben. Seine Herstellung erfolgt in Gegenwart von Tetrapropylammoniumhydroxid, der Zeolith kann ein $SiO_2/Al_2O_3$-Molverhältnis bis etwa 100 aufweisen. Ein vereinfachtes Herstellungsverfahren ist aus der DOS 24 42 240 bekannt, wobei Wasserglas nach Zugabe von weiteren Aluminiumsalzen in Gegenwart von primären Aminen umgesetzt wird. Der entstehende Zeolith weist ein $SiO_2/Al_2O_3$-Molverhältnis bis etwa 100 auf. Die so hergestellten Produkte sind jedoch uneinheitlich und enthalten größere Mengen an $SiO_2$ oder Silikaten.

Aus der US-PS 3 941 871 ist schließlich die Herstellung besonders Si-reicher ZSM-5-artiger Zeolithe bekannt, die ein $SiO_2/Al_2O_3$-Molverhältnis von 800 bis etwa 4 000 aufweisen. Diese Zeolithe werden in Gegenwart von Tetrapropylammoniumhydroxid hergestellt.

Ein Nachteil der beschriebenen Si-reichen Zeolithe ($SiO_2/Al_2O_3 > 100$) besteht darin, daß zu ihrer Herstellung teure quaternäre Stickstoffbasen erforderlich sind und ihre katalytische Aktivität erheblich geringer ist als die ihrer Al-reicheren Analogen.

Es war daher die Aufgabe gestellt, aus billigen Ausgangsmaterialien Zeolithe herzustellen, die bezüglich ihrer katalytischen Aktivität und Selektivität ein optimales $SiO_2/Al_2O_3$-Molverhältnis aufweisen.

Es wurde nun gefunden, daß man kristalline Aluminosilikatzeolithe mit optimalem $SiO_2/Al_2O_3$-Molverhältnis und ausgezeichneter katalytischer Aktivität unter Vermeidung der Nachteile der bekannten Herstellungsweisen aus Wasserglas und organischen Aminen erhält, wenn man die Kristallisation ohne weitere Zugabe eines Metallsalzes in Gegenwart von Hexamethylendiamin durchführt.

Man erhält nach diesem neuen Verfahren Zeolithe der genannten Art, insbesondere mit einem $SiO_2/Al_2O_3$-Molverhältnis von größer 100 bis etwa 700, insbesondere 100 bis 300, indem man technisches Wasserglas in Gegenwart von Hexamethylendiamin auf Temperaturen zwischen 100 bis 200 °C unter dem Eigendruck der Lösungen erhitzt, bis die Kristallisation eintritt. Es war überraschend, daß technisches Wasserglas ohne Zugabe eines weiteren Metallsalzes in Gegenwart eines nichtquaternären organischen Amins zu den oben beschriebebenen Zeolithen kristallisiert.

Unter technischem Wasserglas im Sinne der Erfindung wird eine durch alkalischen Aufschluß aus $SiO_2$ hergestellte Natriumsilikatlösung mit 7-9 Gew.-% $Na_2O$, 25-30 Gew.-% $SiO_2$ und einem $Al_2O_3$-Gehalt zwischen 0,05 bis 0,25 Gew.-%, der stets als Verunreinigung enthalten ist, verstanden. In der Regel beträgt der $Al_2O_3$-Gehalt solcher Wasserglaslösungen 0,15-0,20 Gew.-%. Das Hexamethylendiamin kann sowohl in kristallisierter als auch in gelöster Form eingesetzt werden. Als Lösungsmittel verwendet man zweckmäßig Wasser, wobei vorteilhaft im gesamten Ansatz mindestens soviel Wasser enthalten sein soll, daß alles Hexamethylendiamin in Lösung geht. Es ist zweckmäßig, eine etwa 50 % ige Lösung von Hexamethylendiamin in Wasser zu verwenden. Gegebenenfalls kann man die Alkalität des Gesamtansatzes auch durch Zugabe von Mineralsäuren, z.B. Schwefelsäure, regulieren. Vorteilhaft stellt man den Ansatz so ein, daß die Konzentration an Hexamethylendiamin zwischen 2,5 und 20 Gew.-% liegt.

Eine bevorzugte Ausführungsform des Verfahrens besteht darin, daß man eine Mischung von technischem Wasserglas, Schwefelsäure und Hexamethylendiamin, unter dem Eigendruck der Lösungen 1 bis 5 Tage auf Temperaturen von etwa 150 °C erhitzt. Dabei wird eine wäßrige Lösung von technischem Wasserglas mit Hexamethylendiamin, das wasserlöslich ist, gemischt und die Mischung ohne weitere Zugabe von Metallsalzen unter ihrem Eigendruck erhitzt, bis Kristallisation eintritt. Die erfindungsgemäß hergestellten Zeolithe zeichnen sich durch eine besonders hohe Selektivität bei hinreichend hoher katalytischer Aktivität aus. Sie sind insbesondere für die Herstellung von Olefinen aus Methanol bzw. Dimethyläther, für Alkylierungsreaktionen und zur Oligomerisierung von Kohlenwasserstoffen geeignet.

Die nach dem erfindungsgemäßen Verfahren erhaltenen Zeolithe vom ZSM-5 Typ werden in der Regel nicht unmittelbar, sondern erst nach einer Aktivierung als Katalysatoren eingesetzt. Dabei werden die Na-Ionen gegen andere Kationen wie $H^+$, $Ce^{3+}$, $La^{3+}$ oder andere mehrwertige Ionen ausgetauscht. Dies kann mit Hilfe von bekannten Ionenaustauschverfahren erfolgen. Die Durchführung der erfindungsgemäßen Verfahrens wird an Hand der nachstehenden Beispiele näher erläutert.

Beispiel 1

Es werden drei Lösungen hergestellt :

Lösung 1 besteht aus 32,66 g technischem Wasserglas (~8 Gew.-% Na$_2$O ; 27,2 Gew.-% SiO$_2$ ; 0,18 Gew.-% Al$_2$O$_3$) und 35,20 g Wasser,

Lösung 2 besteht aus 30 g 50 %iger wässriger Hexamethylendiaminlösung und

Lösung 3 aus 50,83 g Wasser und 2,47 g 96 %iger Schwefelsäure

Die Lösungen 2 und 3 werden unter Rühren zu Lösung 1 hinzugegeben und die erhaltene Mischung in einem Stahlautoklav 5 Tage auf 150 °C erhitzt. Das erhaltene Produkt wird filtriert, gewaschen und bei 100 °C getrocknet. Laut Röntgenbeugungsdiagramm besteht es aus gut kristallisiertem Material mit den Beugungslinien des bekannten Zeolithen ZSM-5. Die chemische Analyse des bei 550 °C kalzinierten Produktes ergibt folgendes Ergebnis :

0,47 Gew.-% Na$_2$O ; 0,75 Gew.-% Al$_2$O$_3$ ; 93,3 Gew.-% SiO$_2$. Das SiO$_2$/Al$_2$O$_3$-Molverhältnis beträgt 211.

## Beispiel 2

In diesem Beispiel besteht Lösung 2 aus 8 g 50 %iger wässriger Hexamethylendiaminlösung. Die Zusammensetzung der Lösungen 1 und 3 sowie die Kristallisationsbedingungen bleiben wie im Beispiel 1 beschrieben. Es entsteht ein gut kristallisiertes Produkt, das die Röntgenbeugungslinien des bekannten Zeolithen ZSM-5 aufweist. Das SiO$_2$/Al$_2$O$_3$-Molverhältnis beträgt 270.

## Anspruch

Verfahren zur Herstellung von kristallinen Aluminiumsilikatzeolithen vom ZSM-5 Typ aus Wasserglas und einem organischen Amin, *dadurch gekennzeichnet*, daß die Kristallisation ohne weitere Zugabe eines Metallsalzes in Gegenwart von Hexamethylendiamin durchgeführt wird.

## Claim

A process for the preparation of a crystalline aluminum silicate zeolite of the ZSM-5 type from waterglass and an organic amine, *characterized in that* the crystallization is carried out without further addition of a metal salt, in the presence of hexamethylenediamine.

## Revendication

Procédé de préparation de zéolithes au silicate d'aluminium de type ZSM-5 à partir de silicate (verre soluble) et d'une amine organique, caractérisé par le fait que l'on effectue la cristallisation en présence d'hexaméthylènediamine sans plus d'addition d'un sel métallique.